# EUROPÄISCHE PATENTSCHRIFT

(11) **EP 2 693 582 B1**
(45) Veröffentlichungstag und Bekanntmachung des Hinweises auf die Patenterteilung: **05.11.2014**
(21) Anmeldenummer: 12179022.4
(22) Anmeldetag: 02.08.2012
(51) Int. Cl.: G01D 5/244, H02G 3/08, G01D 11/24

(54) **Drehgeber**
Rotary encoder
Encodeur rotatif

(43) Veröffentlichungstag der Anmeldung: 05.02.2014
(73) Patentinhaber: SICK STEGMANN GmbH, 78166 Donaueschingen (DE)
(72) Erfinder: Tabler, Eduard, 78050 Villingen-Schwenningen (DE)
(74) Vertreter: Ludewigt, Christoph

(56) Entgegenhaltungen:
- EP-A2- 2 253 940
- DE-C1- 10 119 910
- DE-C1- 19 952 643

## Beschreibung

Die Erfindung betrifft einen Drehgeber gemäß dem Oberbegriff des Patentanspruchs 1.

Aus der DE 199 52 643 C1 ist es bekannt, bei einem Gehäuse zur Aufnahme von elektronischen und optoelektronischen Funktionskomponenten einen Drehkörper in einem Wanddurchbruch des Gehäuses anzuordnen, der für den Abgang von Anschlussverbindungen der Funktionskomponenten genutzt wird. Die Anschlussverbindungen können Anschlusskabel oder Steckverbinder sein. Der Drehkörper weist eine gegen seine Mittelachse schräg gestellte Anlagefläche auf, mit welcher er an einer Außenfläche des Gehäuses anliegt. Von der Anlagefläche springt ein rotationssymmetrischer Ansatz vor, der in eine entsprechende rotationssymmetrische Aufnahme eingesetzt wird, die in dem Wanddurchbruch des Gehäuses ausgebildet ist. Wird der Drehkörper um die Achse des Ansatzes gedreht, so ändert sich die Richtung der Mittelachse des Drehkörpers. Dadurch ist es möglich, bei demselben Gehäuse die Abgangsrichtung der Anschlussverbindungen zu ändern und den Einbaugegebenheiten anzupassen.

Der Ansatz des Drehkörpers und die Aufnahme des Gehäuses weisen eine kreiszylindrische Form auf, so dass der Ansatz in der Aufnahme stufenlos verdrehbar ist. Um den Ansatz in der Aufnahme axial zu verriegeln, weist der Ansatz eine Umfangsnut auf, in welche eine Verriegelungslasche eingreift, die seitlich in das Gehäuse eingeschoben wird. An der Verriegelungslasche ist ein elastisch federnder Rasthaken angeformt, der radial vorgespannt in die Umfangsnut eingreift. Im Grund der Umfangsnut sind in Umfangsrichtung im Winkel gegeneinander versetzte radiale Vertiefungen vorgesehen, in welche der Rasthaken federnd einrastet, um den Ansatz und damit den Drehkörper in vorgegebenen Drehstellungen zu arretieren. Die Verriegelungslasche ist an einem seitlichen Gehäusedeckel angebracht, was die Herstellungs- und Montagekosten beeinflusst. Der aus Kunststoff bestehende Rasthaken ist elastisch beansprucht, was die Dauerstandfestigkeit beeinträchtigt.

Aus der DE 197 18 392 A1 ist es bekannt, einen Drehkörper mit einer schräg gestellten Anlagefläche mittels eines kreiszylindrischen Ansatzes in einer Aufnahme einer Außenfläche eines Gehäuses drehbar zu lagern. Zur axialen Verriegelung des Ansatzes in der Aufnahme weist der Ansatz an seinem axialen Ende nach außen gerichtete Wulste auf, die hinter eine Hinterschneidung der Aufnahme einrasten. Ein zusätzliches Sperrelement muss von der Gehäuseinnenseite in den Ansatz eingeschoben werden, um die Verriegelung zu sichern.

Aus der DE 101 19 910 C1 ist es bekannt, einen Drehkörper in einem Wanddurchbruch eines Gehäuses durch ein im Gehäuseinneren angeordnetes Einlegeteil axial zu verriegeln. Dieses zusätzliche Einlegeteil macht die Herstellung und Montage aufwendig.

Aus der DE 91 03 155 U1 ist es bekannt, bei einem Drehgeber die Anschlussverbindungen über einen Drehkörper aus dem Gehäuse herauszuführen, um einen radialen oder tangentialen Abgang der Anschlussverbindungen realisieren zu können.

Der Erfindung liegt die Aufgabe zugrunde, bei einem Drehgeber der eingangs genannten Gattung die Herstellungs- und Montagekosten zu reduzieren.

Diese Aufgabe wird erfindungsgemäß gelöst durch einen Drehgeber mit den Merkmalen des Patentanspruchs 1.

Vorteilhafte Ausführungen der Erfindung sind in den Unteransprüchen angegeben.

Bei dem erfindungsgemäßen Drehgeber sitzt der Drehkörper mit einem Ansatz drehbar in einer entsprechend geformten Aufnahme des Gehäuses. Die Arretierung in vorgegebenen Drehstellungen des Ansatzes, die den vorgegebenen Abgangsrichtungen der Anschlussverbindungen entsprechen, wird durch ein axiales Federelement in Form einer Kreisringscheibe bewirkt, das axial abgestützt in der Aufnahme sitzt. Der Ansatz des Drehkörpers sitzt mit seiner axialen Stirnfläche auf diesem axialen Federelement auf. Das axiale Federelement weist wenigstens eine Aufwölbung aus seiner Ebene auf, während die auf dem axialen Federelement aufsitzende axiale Stirnfläche des Ansatzes wenigstens eine Freisparung aufweist, die der Aufwölbung des axialen Federelements entspricht. Bei einer Verdrehung des Drehkörpers und damit einer Drehung des Ansatzes in der Aufnahme schnappt das axiale Federelement mit seiner Aufwölbung jeweils in den vorgegebenen Drehstellungen in eine Freisparung ein, so dass der Ansatz in dieser Drehstellung arretiert ist. Bei einer Verdrehung des Ansatzes aus einer Arretierstellung in eine andere Arretierstellung wird die Aufwölbung des axialen Federelements elastisch niedergedrückt, bis sie in die Freisparung der nächsten Arretierstellung einrasten kann.

Um den Ansatz axial in der Aufnahme zu verriegeln, weist der Ansatz vorzugsweise eine Umfangsnut auf, in welche ein in dem Gehäuse gelagertes Verriegelungselement eingreift. Vorzugsweise wird das Verriegelungselement durch einen oder zwei Stifte gebildet, die in das Gehäuse eingesetzt werden und tangential in die Umfangsnut des Ansatzes eingreifen.

Um das axiale Federelement in der Aufnahme drehfest zu halten, weist das axiale Federelement vorzugsweise eine unrunde Außenumfangskontur auf und wird in einer entsprechenden unrunden Innenkontur der Aufnahme unverdrehbar gehalten.

Die Erfindung ermöglicht einen äußerst einfachen Aufbau und eine einfache Montage des Drehgebers. Der Drehkörper muss mit seinem kreiszylindrischen oder gegebenenfalls auch sich konisch verjüngenden Ansatz lediglich in die entsprechende Aufnahme axial eingesteckt werden. Zur Arretierung in den gewünschten Drehstellungen muss lediglich das axiale Federelement in die Aufnahme eingelegt werden, bevor der Ansatz eingeführt wird. Die axiale Arretierung erfolgt durch die Stifte, die in das Gehäuse eingesteckt werden und in die Umfangsnut des Ansatzes eingreifen. Sowohl die Arretierung in den gewünschten Winkelstellungen als auch die axiale Verriegelung erfolgt ohne federnde Schnappverbindungen, so dass auch spröde Materialien, wie Zinkdruckguss, Magnesiumguss oder Aluminiumguss verwendet werden können. Die Aufnahme und der Ansatz weisen keine Hinterschneidungen auf, was die Herstellung und die Montage einfach macht. Das Material des axialen Federelements kann unabhängig von allen anderen Bauteilen frei gewählt werden. Es kann daher ein Material gewählt werden, welches eine hohe Standfestigkeit auch bei vielen Verstellzyklen des Drehkörpers aufweist. Die Federeigenschaften des axialen Federelements können so gewählt werden, dass die Verformung des axialen Federelements beim Verdrehen des Drehkörpers im elastischen Bereich erfolgt. Durch die Wahl des Materials und der Materialstärke des axialen Federelements kann dessen Federkraft so festgelegt werden, dass eine zuverlässige Arretierung in den gewünschten Drehstellungen und die Verstellbarkeit aus den arretierten Drehstellungen optimal aufeinander abgestimmt werden.

In Weiterbildung der Erfindung ist das axiale Federelement als Blattfeder ausgebildet.

Im Folgenden wird die Erfindung anhand eines in der Zeichnung dargestellten Ausführungsbeispiels näher erläutert. Es zeigen:

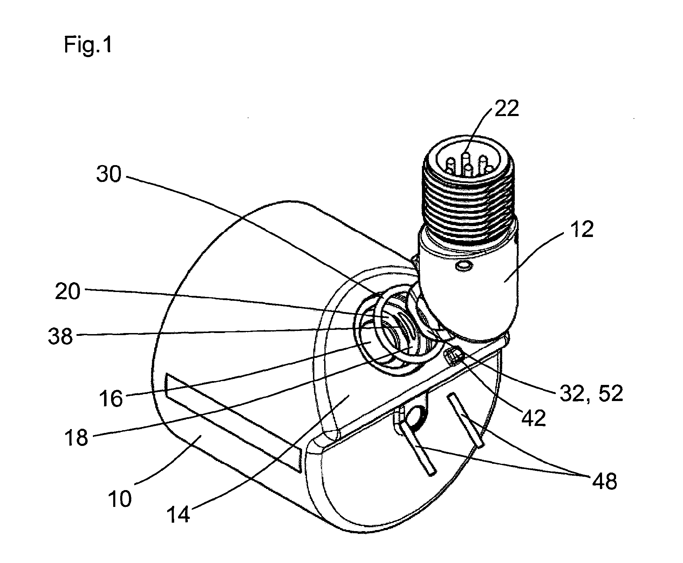

- Figur 1: einen Drehgeber mit einem Drehkörper in Explosionsdarstellung,

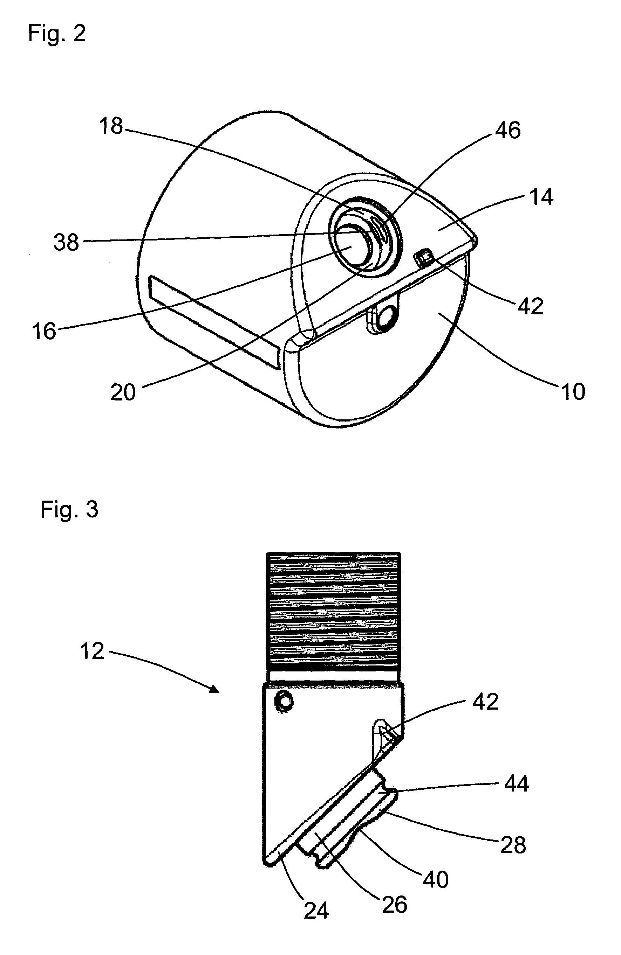

- Figur 2: das Gehäuse des Drehgebers,
- Figur 3: den Drehkörper,
- Figur 4: eine teilweise geschnittene Darstellung, bei welcher die Schnittebene in der Achse der Aufnahme und des Drehkörpers verläuft,
- Figur 5: eine Seitenansicht des axiales Federelements,
- Figur 6: eine Draufsicht auf das axiale Federelement,
- Figur 7: den Drehgeber mit dem Drehkörper in einer Drehstellung und
- Figur 8: eine entsprechende Darstellung mit dem Drehköper in einer anderen Drehstellung.

In dem in der Zeichnung dargestellten Ausführungsbeispiel weist der Drehgeber ein Gehäuse 10 auf, welches Funktionskomponenten des Drehgebers umschließt. Diese Funktionskomponenten können in beliebiger aus dem Stand der Technik bekannten Weise ausgebildet sein. Insbesondere umschließt das Gehäuse 10 eine Drehgeberwelle, die beispielsweise mit einer zu messenden Motorwelle gekuppelt wird. Die Drehgeberwelle treibt in winkelfester Beziehung eine Maßverkörperung an, die durch eine drehfest in dem Gehäuse 10 angeordnete Abtastung abgetastet wird. Die Maßverkörperung und die Abtastung können optoelektronisch, kapazitiv oder induktiv ausgebildet sein, wobei sowohl eine absolut codierte als auch eine inkrementale Abtastung möglich ist. Die von den Funktionskomponenten erzeugten Signale des Drehgebers werden über Anschlussverbindungen zu einer Signalverarbeitung geführt. Für den Abgang der Anschlussverbindungen aus dem Gehäuse 10 dient erfindungsgemäß ein Drehkörper 12. Der Drehkörper 12 kann als Hülse ausgebildet sein, durch welche die Anschlussverbindungen als Kabel hindurchgeführt werden, oder in den Drehkörper 12 kann ein Steckverbinder für die Anschlussverbindungen eingesetzt sein.

Im dargestellten Ausführungsbeispiel ist das Gehäuse zylindrisch und symmetrisch zu einer Längsachse ausgeführt, insbesondere kreiszylindrisch und rotationssymmetrisch zu einer mittigen Längsachse. In dieser Längsachse ist im Allgemeinen die Geberwelle angeordnet. An einem stirnseitigen Ende ist das Gehäuse 10 abgeschrägt, so dass eine Außenfläche 14 des Gehäuses 10 gebildet wird, die gegen die Längsachse schräg gestellt ist, insbesondere unter 45° zur Längsachse des Gehäuses 10 schräg gestellt ist.

In dieser Außenfläche 14 weist die Wandung des Gehäuses 10 einen Wanddurchbruch 16 auf. In diesem Wanddurchbruch 16 wird eine Aufnahme 18 gebildet. Die Aufnahme 18 hat die Form eines geraden Kreiszylinders, dessen Achse senkrecht zu der Außenfläche 14 verläuft. Die Aufnahme 18 ist an der Außenseite der Außenfläche 14 mit ihrem gesamten Querschnitt offen. Den inneren Grund der Aufnahme 18 bildet eine Innenschulter 20 des Wanddurchbruchs 16, die eine zur Achse der Aufnahme 18 senkrechte, der Aufnahme 18 zugewandte Auflagefläche bildet. Innerhalb der Innenschulter 20 ist der Wanddurchbruch 16 für den Durchtritt der Anschlussverbindungen offen.

Der Drehkörper 12 ist zylindrisch ausgebildet und weist beispielsweise einen Steckverbinder 22 für die Anschlussverbindungen auf. An seinem dem Steckverbinder 22 entgegen gesetzten Ende ist der Drehkörper 12 abgeschrägt, so dass er eine gegen die Mittelachse des Drehkörpers 12 schräg gestellte Anlagefläche 24 bildet. Im dargestellten Ausführungsbeispiel ist die Anlagefläche 24 vorzugsweise unter 45° gegen die Mittelachse des Drehkörpers 12 schräg gestellt.

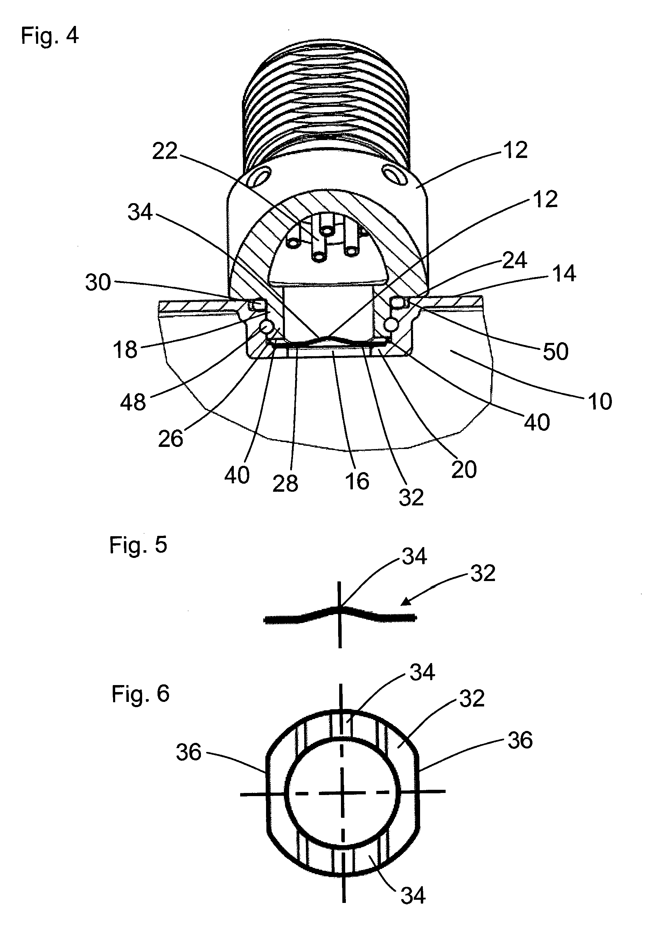

Von der schräg gestellten Anlagefläche 24 steht ein einstückig an dem Drehkörper 12 angeformter Ansatz 26 vor. Der Ansatz 26 ist als gerader Kreiszylinder ausgebildet, der rotationssymmetrisch ist, wobei seine Achse senkrecht auf der Anlagefläche 24 steht. Der Außendurchmesser des Ansatzes 26 entspricht dem Innendurchmesser der Aufnahme 18. Die axiale Länge des Ansatzes 26 von der Anlagefläche 24 bis zu seiner axialen Stirnfläche 28 entspricht der axialen Tiefe der Aufnahme 18 von der Außenfläche 14 des Gehäuses 10 bis zu den Vorsprüngen 38. Der Drehkörper 12 ist mit seinem Ansatz 26 in die Aufnahme 18 einsetzbar, so dass der Drehkörper 12 mit seinem Ansatz 26 in der Aufnahme 18 drehbar gelagert aufgenommen ist. Die Wandstärke des hohlzylindrischen Ansatzes 26 entspricht im Wesentlichen der radialen Breite der Innenschulter 20, so dass sich der offene innere Querschnitt des Ansatzes 26 im Wesentlichen stufenlos an den offenen Innenquerschnitt der Innenschulter 20 anschließt, wie dies insbesondere in Figur 4 zu sehen ist.

In dem dargestellten Ausführungsbeispiel haben die Aufnahme 18 und der Ansatz 26 jeweils die Form eines geraden Kreiszylinders. Diese Form ermöglicht die drehbare Lagerung des Ansatzes 26 in der Aufnahme 18. Außerdem hat diese Form den Vorteil, dass der Ansatz 26 und insbesondere die Aufnahme 18 keine Hinterschneidungen aufweisen, so dass die Herstellung einfach ist und insbesondere der Ansatz 26 bei der Montage einfach axial in die Aufnahme 18 eingeführt werden kann. Es ist ohne weiteres ersichtlich, dass diese Vorteile in gleicher Weise erreicht werden können, wenn sich der Ansatz 26 gegen sein freies Ende hin und die Aufnahme 18 gegen die Innenschulter 20 hin formgleich verjüngen. Auch eine solche Ausführung wird durch die Erfindung abgedeckt.

Um das Gehäuse 10 im Bereich des Wanddurchbruchs 16 abzudichten, ist auf den Außenumfang des Ansatzes 26 ein O-Ring 30 aufgesetzt. Bei montiertem Drehkörper 12 liegt der O-Ring 30 axial einerseits an der Anlagefläche 24 des Drehkörpers 12 und andererseits an der Außenfläche der O-Ringtasche 50 des Gehäuses 10 an, wie insbesondere in Figur 4 zu sehen ist.

Wird der Drehkörper 12 mit seinem Ansatz 26 in der Aufnahme 18 um die Rotationsachse des Ansatzes 26 und der Aufnahme 18 gedreht, so ändert die Mittelachse des Drehkörpers 12 aufgrund der Schrägstellung der Anlagefläche 24 ihre Richtung gegenüber dem Gehäuse 10. Dadurch kann die Abgangrichtung des Drehkörpers 12 gegenüber dem Gehäuse 10 den jeweiligen Einbaubedingungen des Drehgebers angepasst werden. Die durch den Drehgeber nach außen geführte Anschlussleitung bzw. die an den Steckverbinder 22 des Drehkörpers 12 angeschlossenen Leitungen können in der für den Einbau günstigsten Richtung geführt werden.

Um den Drehkörper 12 in der jeweils gewünschten Drehrichtung zu arretieren, ist eine in den Figuren 5 und 6 als Einzelteil dargestelltes axiales Federelement 32 vorgesehen. Das axiale Federelement 32 kann durch eine Blattfeder 52 gebildet sein. Das axiale Federelement 32 besteht aus einem geeigneten federelastischen Material, insbesondere aus einem Federblech und insbesondere aus einem Stahlfederblech geeigneter Elastizitätseigenschaften. Das axiale Federelement 32 hat die Form einer Kreisringscheibe, wobei der Außendurchmesser und der Innendurchmesser der Kreisringscheibe des axialen Federelements 32 dem Außendurchmesser und dem Innendurchmesser der Innenschulter 20 entsprechen. Das axiale Federelement 32 kann somit frei in die Aufnahme 18 eingelegt werden und sitzt axial auf der Innenschulter 20 der Aufnahme 18 auf. Das axiale Federelement 32 weist wenigstens eine Aufwölbung 34 auf, in welcher sie in einem Winkelbereich aus der Ebene ihrer Fläche hochgebogen ist. Wie insbesondere in den Figuren 5 und 6 zu sehen ist, weist in dem dargestellten Ausführungsbeispiel das axiale Federelement 32 zwei Aufwölbungen 34 auf, die durch eine gemeinsame diametrale Verformung des axialen Federelements 32 erzeugt werden. Die Aufwölbungen 34 bilden in Umfangsrichtung des axialen Federelements 32 eine elastisch federnde Schwelle.

Das axiale Federelement 32 wird am Grund der Aufnahme 18 auf der Innenschulter 20 aufliegend unverdrehbar gehalten. Hierzu weist das axiale Federelement 32 eine unrunde Außenumfangskontur auf und die Aufnahme 18 weist angrenzend an die Innenschulter 20 ebenfalls einen entsprechenden unrunden Innenquerschnitt auf, dessen axiale Abmessung in etwa der Materialstärke des axialen Federelements 32 entspricht. Im dargestellten Ausführungsbeispiel wird die unrunde Außenumfangskontur des axialen Federelements 32 durch zwei geradlinige Sekantenabschnitte 36 am Außenumfang des axialen Federelements 32 gebildet. Mit diesen Sekantenabschnitten 36 des axialen Federelements 32 wirken entsprechende Vorsprünge 38 zusammen, die angrenzend an die Innenschulter 20 am Innenumfang der Aufnahme 18 angeformt sind. Durch das Zusammenwirken der Vorsprünge 38 mit den Sekantenabschnitten 36 wird das axiale Federelement 32 unverdrehbar auf der Innenschulter 20 aufliegend gehalten.

Wenn der Drehkörper 12 mit seinem Ansatz 26 in die Aufnahme 18 eingesetzt ist, sitzt der Ansatz 26 mit seiner axialen Stirnfläche 28 auf dem axialen Federelement 32 auf. Die axiale Stirnfläche 28 des Ansatzes 26 hat im Wesentlichen die gleiche Kreisringform wie das axiale Federelement 32, jedoch ohne Sekantenabschnitte und die Innenschulter 20. In der Stirnfläche 28 des Ansatzes 26 sind Freisparungen 40 ausgebildet, die im Wesentlichen eine zu der Form der Aufwölbungen 34 des axialen Federelements 32 komplementäre Form aufweisen. Dies bedeutet, dass die Freisparungen 40 jeweils Vertiefungen in Winkelbereichen der axialen Stirnfläche 28 des Ansatzes 26 bilden, in welche die Aufwölbung 34 des axialen Federelements 32 elastisch federnd eintreten kann. Im dargestellten Ausführungsbeispiel sind vorzugsweise vier Freisparungen 40 vorgesehen, die in Umfangsrichtung der Stirnfläche 28 jeweils um 90° gegeneinander versetzt sind. Dadurch sind vier jeweils um 90° in Drehrichtung gegeneinander versetzte Drehstellungen des Drehkörpers vorgegeben, in welchen die diametralen Aufwölbungen 34 des axialen Federelements 32 in zwei diametral zueinander angeordnete Freisparungen 40 einrasten, um den Drehkörper 12 in der jeweiligen Drehstellung zu arretieren. In diesen vorgegebenen Arretierungsstellungen treten die Aufwölbungen 34 des axialen Federelements 32 in die Freisparungen 40 der axialen Stirnfläche 28 des Ansatzes 26 ein, so dass das axiale Federelement 32 spannungsfrei ist. Von einer Arretierungsstellung in die nächste vorgegebene Arretierungsstellung wird der Drehkörper 12 verdreht, wobei die Aufwölbungen 34 des axialen Federelements 32 gegen ihre elastische Federkraft niedergedrückt werden, bis sie in der folgenden Arretierungsstellung sich wieder entspannen und in die entsprechenden Freisparungen 40 einrasten können.

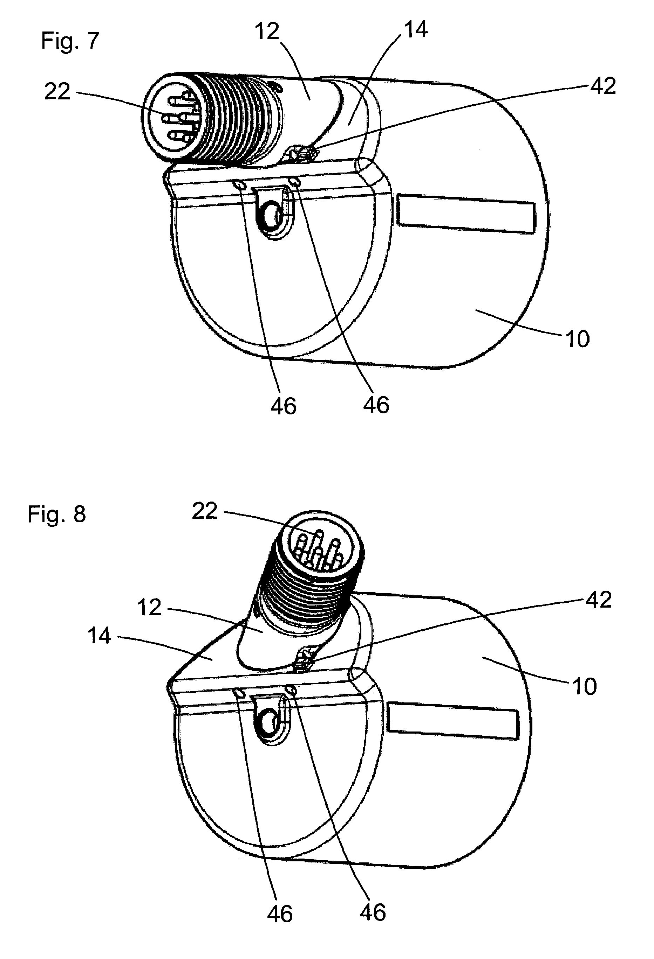

In dem in der Zeichnung dargestellten Ausführungsbeispiel ist die Anlagefläche 24 unter 45° zur Mittelachse des Drehkörpers 12 schräg gestellt. Die Außenfläche 14 des Gehäuses 10 ist ebenfalls unter 45° zur Längsachse des zylindrischen Gehäuses 10 schräg gestellt. Dadurch ergeben sich vier vorgegebene Drehrichtungen, in denen der Drehkörper 12 an dem Gehäuse 10 arretiert ist. In der in Figur 7 gezeigten Drehstellung (0°) verläuft die Mittelachse des Drehkörpers 12 achsparallel zur Längsachse des Gehäuses 10. Die Anschlussverbindungen können daher axial an der Stirnfläche des Gehäuses 10 abgehen. Wird der Drehkörper um 90° in die nächste arretierende Drehstellung gedreht, die in Figur 8 gezeigt ist, so ist die Mittelachse des Drehkörpers 12 in etwa tangential zu dem Gehäuse 10 angeordnet. Die Anschlussverbindungen können somit seitlich von dem Gehäuse 10 abgehen. Bei einer weiteren Drehung in die arretierende 180° Drehstellung ist die Mittelachse des Drehkörpers 12 radial senkrecht zu der Rotationslängsachse des Gehäuses 10 angeordnet. Die Anschlussverbindungen können daher radial abgehen. Eine weitere Drehung um 90° in die arretierende 270°-Drehstellung ergibt wieder eine im Wesentlichen tangentiale Abgangsrichtung des Drehkörpers 12, die jedoch zu der Richtung der Figur 8 entgegengesetzt ist.

An dem Außenumfang des Drehkörpers 12 angrenzend an die Anlagefläche 24 und in dem an den Außenumfang der Anlagefläche 24 angrenzenden Bereich der Außenfläche 14 ist jeweils ein Anschlag 42 angeformt. Durch die Anschläge 42 wird der gesamte Drehwinkel des Drehkörpers 12 auf eine volle Umdrehung begrenzt, wodurch ein Verdrillen der Anschlusskabel in dem Gehäuse durch mehrfache Umdrehungen des Drehkörpers 12 verhindert wird.

Ist der Ansatz 26 des Drehkörpers 12 in die Aufnahme 18 bei der Montage eingesetzt, so wird der Ansatz 26 axial in der Aufnahme 18 verriegelt. Dadurch wird der Ansatz 26 auf dem axialen Federelement 32 axial aufsitzend und axial unverlierbar, jedoch in der Aufnahme 18 drehbar gehalten. Für diese axiale Verriegelung ist im Außenumfang des Ansatzes 26 eine Umfangsnut 44 vorgesehen. In Bohrungen 46 des Gehäuses 10 werden Stifte 48 eingesteckt. Die Bohrungen 46 und damit die in diese Bohrungen 46 eingesteckten Stifte 48 schneiden die Aufnahme 18 tangential in dem Bereich, in welchem sich die Umfangsnut 44 bei eingesetztem Ansatz 26 befindet. Die Stifte 48 kommen dadurch tangential in der Umfangsnut 44 des Ansatzes 26 in Eingriff und halten dadurch den Ansatz 26 axial verriegelt aber drehbar in der Aufnahme 18. Im dargestellten Ausführungsbeispiel sind zwei Bohrungen 46 und entsprechend zwei Stifte 48 vorgesehen, die diametral zueinander in die Umfangsnut 44 eingreifen, so dass die axiale Verriegelung kein Kippmoment in Bezug auf die Achse des Ansatzes 26 bewirkt.

Der erfindungsgemäße Drehgeber ist in Bezug auf Herstellung und Montage äußerst einfach. Die Aufnahme 18 des Gehäuses 10 und des Drehkörpers 12 sind einfach geformte Teile ohne Hinterschneidungen. Zusätzliche Teile sind nur das axiale Federelement 32, der O-Ring 30 und die Stifte 48. Dies sind äußerst einfache und kostengünstige Einzelteile, die weitgehend standardisiert sind. Die Montage ist extrem einfach. Das axiale Federelement 32 wird lose in die Aufnahme 18 eingelegt. Dann wird der Drehkörper 12 mit seinem Ansatz 26 in die Aufnahme 18 eingesetzt, was ohne jegliche Schnappverbindungen oder dergleichen erfolgt. Schließlich müssen nur noch die Stifte 48 in die Bohrungen 46 gesteckt werden, um die Montage abzuschließen.

### Bezugszeichenliste

- 10: Gehäuse
- 12: Drehkörper
- 14: Außenfläche
- 16: Wanddurchbruch
- 18: Aufnahme

- 20: Innenschulter
- 22: Steckverbinder
- 24: Anlagefläche
- 26: Ansatz
- 28: Stirnfläche

- 30: O-Ring
- 32: axiales Federelement
- 34: Aufwölbung
- 36: Sekantenabschnitte
- 38: Vorsprünge

- 40: Freisparungen
- 42: Anschläge
- 44: Umfangsnut
- 46: Bohrungen
- 48: Stifte
- 50: O-Ringtasche
- 52: Blattfeder

## Patentansprüche

1. Drehgeber mit einem Funktionskomponenten aufnehmenden Gehäuse (10) und mit einem in einen Wanddurchbruch (16) des Gehäuses (10) einsetzbaren Drehkörper (12) für den Abgang von Anschlussverbindungen der Funktionskomponenten, wobei der Drehkörper (12) eine an einer Außenfläche (14) des Gehäuses (10) anliegende gegen die Mittelachse des Drehkörpers (12) schräg gestellte Anlagefläche (24) aufweist, wobei der Drehkörper (12) einen von seiner Anlagefläche (24) vorspringenden Ansatz (26) aufweist, der zu einer zu der Anlagefläche (24) senkrechten Achse rotationssymmetrisch ist, wobei in dem Wanddurchbruch (16) des Gehäuses (10) eine Aufnahme (18) ausgebildet ist, die zu einer zu der Außenfläche (14) senkrechten Achse rotationssymmetrisch ist, wobei der Ansatz (26) in die Aufnahme (18) einsetzbar ist und in der Aufnahme (18) um seine Achse drehbar und axial verriegelbar gelagert ist und wobei elastisch federnde Arretierungsmittel den Ansatz (26) in vorgegebenen Drehstellungen in der Aufnahme (18) einrastend halten,
**dadurch gekennzeichnet, dass** die Arretierungsmittel ein axiales Federelement (32) mit der Form einer Kreisringscheibe aufweisen, dass das axiale Federelement (32) axial abgestützt und unverdrehbar in die Aufnahme (18) eingesetzt ist, dass der Ansatz (26) des Drehkörpers (12) mit einer axialen Stirnfläche (28) auf dem axialen Federelement (32) aufsitzt, dass das axiale Federelement (32) wenigstens eine Aufwölbung (34) aufweist und dass in der axialen Stirnfläche (28) des Ansatzes (26) wenigstens eine Freisparung (40) ausgebildet ist, in welche das axiale Federelement (32) mit seiner Aufwölbung (34) in den vorgegebenen Drehstellungen federnd einrastet.

2. Drehgeber nach Anspruch 1,
**dadurch gekennzeichnet, dass** der Ansatz (26) und die Aufnahme (18) die Form eines geraden Kreiszylinders haben.

3. Drehgeber nach Anspruch 1 oder 2,
**dadurch gekennzeichnet, dass** in der axialen Stirnfläche (28) des Ansatzes (26) vier Freisparungen (40) ausgebildet sind, die in Umfangsrichtung jeweils um 90° gegeneinander versetzt sind.

4. Drehgeber nach Anspruch 3,
**dadurch gekennzeichnet, dass** das axiale Federelement (32) zwei in Umfangsrichtung um 180° gegeneinander versetzte Aufwölbungen (34) aufweist, die durch eine diametral verlaufende Verformung des axialen Federelements (32) gebildet sind.

5. Drehgeber nach einem der vorhergehenden Ansprüche,
**dadurch gekennzeichnet, dass** das axiale Federelement (32) auf einer Innenschulter (20) des Wanddurchbruchs (16) aufsitzt, die den Grund der Aufnahme (18) bildet.

6. Drehgeber nach einem der vorhergehenden Ansprüche,
**dadurch gekennzeichnet, dass** das axiale Federelement (32) eine unrunde Außenumfangskontur aufweist und in einer entsprechenden unrunden Innenkontur der Aufnahme (18) unverdrehbar gehalten ist.

7. Drehgeber nach einem der vorhergehenden Ansprüche,
**dadurch gekennzeichnet, dass** der Ansatz (26) eine Umfangsnut (44) aufweist, in die wenigstens ein in dem Gehäuse gelagertes Verriegelungselement zur axialen Verriegelung eingreift.

8. Drehgeber nach Anspruch 7,
**dadurch gekennzeichnet, dass** das Verriegelungselement durch wenigstens einen Stift (48) gebildet ist, der in das Gehäuse (10) einsetzbar ist und tangential in die Umfangsnut (44) eingreift.

9. Drehgeber nach einem der vorhergehenden Ansprüche,
**dadurch gekennzeichnet, dass** die Anlagefläche (24) des Drehkörpers (12) unter 45° zu seiner Mittelachse schräg gestellt ist.

10. Drehgeber nach Anspruch 9,
**dadurch gekennzeichnet, dass** das Gehäuse (10) symmetrisch zu einer Längsachse ausgebildet ist und dass die Außenfläche (14), an welcher der Drehkörper (12) anliegt, zu dieser Längsachse vorzugsweise unter einem Winkel von 45° schräg gestellt ist.

11. Drehgeber nach einem der vorhergehenden Ansprüche, **dadurch gekennzeichnet, dass** das axiale Federelement (32) eine Blattfeder (32) ist.

## Claims

1. A rotary encoder having a housing (10) receiving functional components and having a rotary body (12) insertable into a wall opening (16) of the housing (10) for the outlet of terminal connections of the functional components, wherein the rotary body (12) has a contact surface (4) which contacts an outer surface (14) of the housing (10) and which is slanted with respect to the centre axis of the rotary body (12), wherein the rotary body (12) has an attachment (26) which projects from its contact surface (24) and which is rotationally symmetrical to an axis perpendicular to the contact surface (24), wherein a mount (18) is formed in the wall opening (16) of the housing (10) which is rotationally symmetrical to an axis perpendicular to the outer surface (14), wherein the attachment (26) is insertable into the mount (18) and is supported in the mount (18) rotatable about its axis and in an axially lockable manner, and wherein elastically resilient locking means hold the attachment (26) latching in the mount (18) in the predefined rotary positions,
**characterised in that** the locking means have an axial spring element (32) having the form of an annular disc; **in that** the axial spring element (32) is inserted into the mount (18) in an axially supported manner and non-rotatably; **in that** an axial end surface (28) of the attachment (26) of the rotary body (12) is seated on the axial spring element (30); **in that** the axial spring element (32) has at least one arch (34); and **in that** at least one cutout (40) is formed in the axial end surface (28) of the attachment (26) and the arch (34) of the axial spring element (32) latches resiliently into said cutout in the predefined rotary positions.

2. A rotary encoder in accordance with claim 1,
**characterised in that** the attachment (26) and the mount (18) have the shape of a right circular cylinder.

3. A rotary encoder in accordance with claim 1 or claim 2,
**characterised in that** four cut-outs (40) are formed in the axial end surface (28) of the attachment (26) and each is offset by 90° with respect to one another in the circumferential direction.

4. A rotary encoder in accordance with claim 3,
**characterised in that** the axial spring element (32) has two arches (34) which are mutually offset by 180° in the circumferential direction and which are formed by a diametrically extending deformation of the axial spring element (32).

5. A rotary encoder in accordance with any one of the preceding claims,
**characterised in that** the axial spring element (32) is seated on an inner shoulder (20) of the wall opening (16), which inner shoulder forms the base of the mount (18).

6. A rotary encoder in accordance with any one of the preceding claims,
**characterised in that** the axial spring element (32) has an out-of-round outer peripheral contour and is held non-rotatably in a corresponding out-of-round inner contour of the mount (18).

7. A rotary encoder in accordance with any one of the preceding claims,
**characterised in that** the attachment (26) has a peripheral groove (44) into which at least one locking element supported in the housing engages for the axial locking.

8. A rotary encoder in accordance with claim 7,
**characterised in that** the locking element is formed by at least one pin (48) which is insertable into the housing (10) and engages tangentially into the peripheral groove (44).

9. A rotary encoder in accordance with any one of the preceding claims,
**characterised in that** the contact surface (24) of the rotary body (12) is slanted at 45° with respect to its centre axis.

10. A rotary encoder in accordance with claim 9,
**characterised in that** the housing (10) is formed symmetrical to a longitudinal axis; and **in that** the outer surface (14) which the rotary body (12) contacts is slanted with respect to this longitudinal axis, preferably at an angle of 45°.

11. A rotary encoder in accordance with any one of the preceding claims,
**characterised in that** the axial spring element (32) is a leaf spring (32).

## Revendications

1. Codeur rotatif comprenant un boîtier (10) recevant des composants fonctionnels, et un corps rotatif (12) susceptible d'être mis en place dans une traversée (16) de la paroi du boîtier (10) pour la sortie des liaisons de connexion des composants fonctionnels, ledit codeur rotatif (12) présentant une surface d'appui (24), appuyée sur une surface extérieure (14) du boîtier (10), disposée en oblique par rapport à l'axe médian du corps rotatif (12), dans lequel le corps rotatif (12) comprend un prolongement (26) en saillie depuis sa surface d'appui (24), qui présente une symétrie de révolution par rapport à un axe perpendiculaire à la surface d'appui (24), dans lequel un logement (18), présentant une symétrie de révolution par rapport à un axe perpendiculaire à la surface extérieure (14), est réalisé dans la traversée (16) de la paroi du boîtier (10), ledit prolongement (26) étant susceptible d'être mis en place dans le logement (18) et est reçu dans le logement (18) de manière à pouvoir tourner autour de son axe et à être verrouillé axialement, et dans lequel des organes d'arrêt présentant l'élasticité d'un ressort retiennent par enclenchement le prolongement (26) dans le logement (18) dans des positions prédéterminées en rotation,
**caractérisé en ce que** les organes d'arrêt comprennent un élément de ressort axial (32) sous la forme d'un disque annulaire, **en ce que** l'élément de ressort axial (32) est mis en place dans le logement (18) de manière à être soutenu axialement et sans possibilité de rotation, **en ce que** le prolongement (26) du corps rotatif (12) s'appuie avec une surface frontale axiale (28) sur l'élément de ressort axial (32), **en ce que** l'élément de ressort axial (32) comporte au moins un bombement (34), et **en ce qu'**au moins une échancrure (40) est ménagée dans la surface frontale axiale (28) du prolongement (26), échancrure dans laquelle l'élément de ressort axial (32) s'enclenche avec effet ressort avec son bombement (34) dans les positions prédéterminées en rotation.

2. Codeur rotatif selon la revendication 1,
**caractérisé en ce que** le prolongement (26) et le logement (18) ont la forme d'un cylindre droit à base circulaire.

3. Codeur rotatif selon la revendication 1 ou 2,
**caractérisé en ce que** quatre échancrures (40) sont ménagées dans la surface frontale axiale (28) du prolongement (26), qui sont décalées respectivement de 90° en direction périphérique les unes par rapport aux autres.

4. Codeur rotatif selon la revendication 3,
**caractérisé en ce que** l'élément de ressort axial (32) comporte deux bombements (34) décalés l'un par rapport à l'autre de 180° en direction périphérique, qui sont formés par une déformation diamétrale de l'élément de ressort axial (32).

5. Codeur rotatif selon l'une des revendications précédentes,
**caractérisé en ce que** l'élément de ressort axial (32) s'appuie sur un épaulement intérieur (20) de la traversée (16) de la paroi, qui forme le fond du logement (18).

6. Codeur rotatif selon l'une des revendications précédentes,
**caractérisé en ce que** l'élément de ressort axial (32) présente un contour de périphérie extérieure non arrondi et est maintenu sans possibilité de rotation dans un contour intérieur correspondant non arrondi du logement (18).

7. Codeur rotatif selon l'une des revendications précédentes,
**caractérisé en ce que** le prolongement (26) comporte une gorge périphérique (44) dans laquelle s'engage au moins un élément de verrouillage monté dans le boîtier en vue du verrouillage axial.

8. Codeur rotatif selon la revendication 7,
**caractérisé en ce que** l'élément de verrouillage est formé par au moins une tige (48), qui est susceptible d'être mise en place dans le boîtier (10) et qui s'engage tangentiellement dans la gorge périphérique (44).

9. Codeur rotatif selon l'une des revendications précédentes,
**caractérisé en ce que** la surface d'appui (24) du corps rotatif (12) est disposée en oblique à 45° par rapport à son axe médian.

10. Codeur rotatif selon la revendication 9,
**caractérisé en ce que** le boîtier (10) est réalisé symétriquement par rapport à un axe longitudinal, et **en ce que** la surface extérieure (14) sur laquelle s'appuie le corps rotatif (12) est disposée en oblique par rapport à cet axe longitudinal, de préférence sous un angle de 45°.

11. Codeur rotatif selon l'une des revendications précédentes,
**caractérisé en ce que** l'élément de ressort axial (32) est un ressort à lame (32).
